# EUROPEAN PATENT SPECIFICATION

(11) **EP 2 454 470 B1**
(45) Date of publication and mention of the grant of the patent: **27.05.2015**
(21) Application number: 09847438.0
(22) Date of filing: 16.07.2009
(51) Int. Cl.: F01D 5/00, F01D 5/28, C23C 4/02

(54) **METHOD OF APPLYING ABRASION RESISTANT MATERIALS TO ROTORS**
VERFAHREN ZUM AUFTRAGEN VON ABRIEBFESTEN MATERIALIEN AUF ROTOREN
PROCÉDÉ D'APPLICATION DE MATÉRIAUX RÉSISTANT À L ABRASION SUR DES ROTORS

(43) Date of publication of application: 23.05.2012
(73) Proprietor: Bell Helicopter Textron Inc., Fort Worth, TX 76101 (US)
(72) Inventor: BISHOP, Stephen, K., Dallas TX 75231 (US); PEACH, Gerald, Valley View TX 76272 (US)
(74) Representative: Lawrence, John
(86) International application number: PCT/US2009/050827
(87) International publication number: WO 2011/008211

(56) References cited:
- WO-A1-2006/055038
- WO-A2-2007/075497
- GB-A- 2 115 499
- US-A- 4 451 205
- US-A1- 2001 004 474
- US-A1- 2001 004 475
- US-A1- 2001 012 568
- US-A1- 2003 203 233
- US-A1- 2004 110 021
- US-A1- 2007 231 156
- US-B1- 6 383 570

## Description

### Technical Field

The present application relates generally to the field of abrasion resistant materials and, more particularly, to a process for applying abrasion resistant materials to a substrate.

### Description of the Prior Art

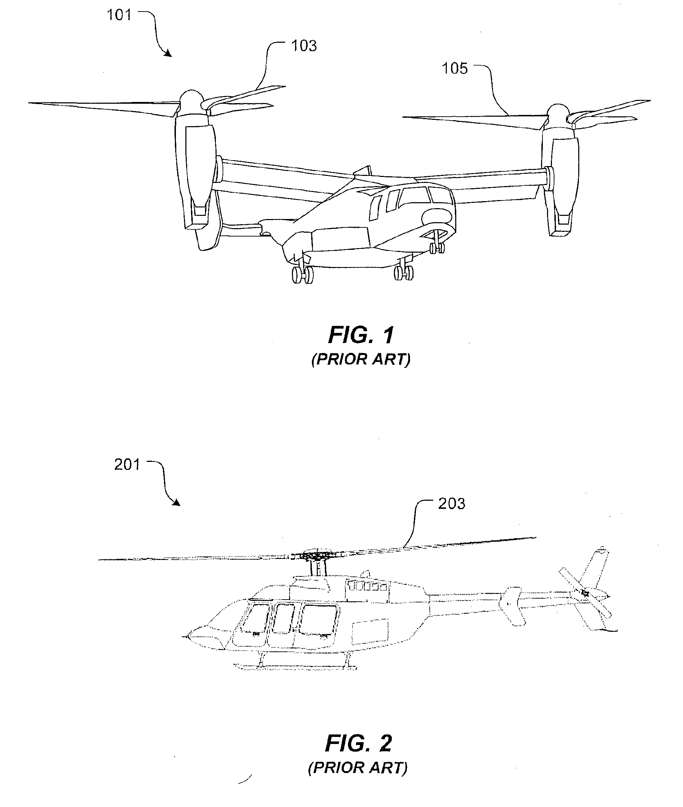

Rotors are well known in the art for effectively propelling various types of aircraft in flight. For example, Figure 1 illustrates a conventional tiltrotor aircraft 101 propelled by two rotors 103 and 105, while Figure 2 illustrates a conventional helicopter 201 propelled by rotor 203. Rotors come in various shapes, sizes and with different aerodynamic contouring for providing maximum propulsion. As is shown, rotors 103 and 105 have a shorter longitudinal length and a greater axial curvature than rotor 203. Like the majority of rotors, rotors 103, 105, and 203 are composed of sufficiently flexible materials for withstanding forces exerted against the rotor during flight. Typical rotor materials include metals, plastics, composites, wood, and other suitable materials. During operation, rotors rotate at high velocities and experience substantial wear due to particulate matter, i.e., water and sand, hitting the surface of the rotor. For example, water spheres exert high impact forces against the rotor which can result in elastomeric delaminating within the polymeric coating of the rotor. In addition, the water spheres can form micro-cracks on metal that can propagate together to form macro-cracks, thereby causing the rotors to fail.

Abrasion resistant materials are applied to the rotors for overcoming the undesired wear. Abrasion resistant materials help to maintain the original design of the rotor by withstanding mechanical action such as rubbing, scraping, or erosion that tends to progressively remove material from the surface. There exist various methods for applying abrasion resistant materials to a substrate. For example, U.S. Patent No. 4,802,828 to Rutz et al. suggests several techniques for providing an abrasion resistant layer to a substrate, including powder metallurgy techniques, plasma spray techniques, and electroplating techniques. In addition, alternative techniques include mechanical shields and electroforming.

In WO2006/055038, a method of protecting a substrate against damage is described. The method comprising disposing on a substrate one or more coatings, wherein one coating comprises an isocyanate-terminated polyurethane prepolymer and a curing agent; wherein the curing agents comprise polyaspartic esters, ketimines, aldimines, or a combination comprising at least one of the foregoing curing agents; reacting the isocyanate-terminated polyurethane prepolymer with a curing agent; wherein the reacting can optionally be carried out in the presence of moisture or heat; and curing the isoycyanate-terminated polyurethane prepolymer to form the coating.

In WO2007/075497, the repair and removal of erosion or impact damage to a curved substrate are described, wherein hand sandable elastomeric coatings are applied to a curved substrate, particularly surfaces such as the leading edge of an airfoil.

In GB 2115499, a rotor blade assembly is described which comprises a rotor blade root and a disk attachment slot that are contoured to provide increasing clearance between the bottom of the blade root and the slot as the blade is withdrawn axially from the slot. Rocking of the blade within the provided clearance enables withdrawal of the blade past shroud segments of the adjacent blades.

Mechanical shields include tape, wood, metal or other similarly suited materials configured for fitting on the contoured surface of the rotor. The shields are securely screwed or adhesively bonded to the exposed surface. The shields provide an inexpensive solution for adding additional abrasion and erosion resistance, but have been found to be ineffective as a means for reducing wear.

Electroplating is a process that uses a chemical bath to plate the surface area of the rotor with an abrasion resistant material. This process includes placing the rotor within a sufficiently sized bath and applying an electric current to the bath for depositing an abrasion resistant material on the surface area of the rotor. The coating thickness of the abrasion resistant material is not uniform, resulting in considerable post-process upgrade work, such as grinding to make the rotor aerodynamically satisfactory. There is also a need to ship the rotors to the plating facility, as plating lines cannot be moved to where the aircraft is located. As a result, disassembly, handling, and shipping costs accrue.

Electroforming is a process that uses an electrodeposition in a plating bath over a base form or mandrel which is subsequently removed. Technically, it is a process of synthesizing a metal object by controlling the electrodeposition of metal passing through an electrolytic solution onto a metal or metallized form. More simply, a metal skin is built up on a metal surface, or any surface that has been rendered electroconductive through the application of a paint that contains metal particles. Essentially, a metal part is fabricated from the plating itself. This process differs from electroplating because the skin is much thicker and can exist as a self-supporting structure if the original matrix, or mandrel, is removed. Like the electroplating process, electroforming requires a large bath sufficiently sized for a rotor and considerable post-process upgrade work is performed. In addition, the rotors must be shipped to the facility, resulting in disassembly, handling, and shipping costs. In both cases, there is a considerable effort and time invested in forming, grinding, polishing, and bonding in order to arrive at the finished product. Both electroplating and electroforming process are slow, difficult to control, complex in nature, and limited with regard to suppliers of services and raw materials.

Plasma spraying devices and techniques are also well known in the art for depositing protective coating on underlying substrates. One known device is illustrated in U.S. Patent No. 3,145,287 to Siebein et al entitled "Plasma Flame Generator and Spray Gun." In accordance with the teachings of *Siebein et al,* a plasma-forming gas forms a sheath around an electric arc. The sheath of gases constricts and extends the arc part way down the nozzle. The gas is converted to a plasma state and leaves the arc and nozzle as a hot plasma stream. Powders are injected into the hot plasma stream and propelled onto the surface of the substrate to be coated.

Although the foregoing developments represent great strides in the area of applying abrasion resistant materials to rotors, many shortcomings remain.

### Brief Description of the Drawings

The invention provides a process for applying an abrasion resistant material to a rotor of an aircraft according to claim 1. The novel features characteristic of the invention are set forth in the appended claims. However, the application itself, as well as, a preferred mode of use, and further objectives and advantages thereof, will best be understood by reference to the following detailed description when read in conjunction with the accompanying drawings, wherein:
Figure 1 is an oblique view of a conventional tiltrotor aircraft;
Figure 2 is a side view of a conventional helicopter;
Figure 3 is an oblique view of a rotor;
Figure 4 is an oblique view of the rotor of Figure 3 with an abrasion resistant material applied according to the preferred process of the present application;
Figure 5 is an enlarged longitudinal cross-sectional view of the rotor of Figure 4 taken at V-V in Figure 4;
Figure 6 is an enlarged cross-sectional view of a portion of the rotor of Figure 5 taken at VI-VI in Figure 5;
Figure 7 is a flow chart illustrating the process of applying an abrasion resistant material to a rotor according to preferred process of the present application; and
Figure 8 is a flow chart illustrating the process of applying an abrasion resistant material to an abrasion strip according to preferred process of the present application.

While the process of the present application is susceptible to various modifications and alternative forms, specific embodiments thereof have been shown by way of example in the drawings and are herein described in detail.

### Description of the Preferred Embodiment

The process for applying an abrasion resistant material to a rotor according to claim 1, overcomes the disadvantages of conventional techniques for applying abrasion resistant materials to rotors. Illustrative embodiments are described below. It will of course be appreciated that in the development of any actual embodiment, numerous implementation-specific decisions will be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The present application is directed to a process for applying abrasion resistant materials to a rotor according to claim 1. The abrasion resistant material is thermally sprayed onto the rotor either through a manual or by an automated process. The process can be performed in the field or within a facility. The abrasion resistant material is composed of a mixed composition comprising a first and a second material. In the preferred embodiment, the first material is an elastomeric material, while the second material is a metallic material. A plurality of abrasion resistant coats are applied to the surface of the rotor. The coats gradually transition from an elastomeric rich material to a metallic rich material as additional coats are applied.

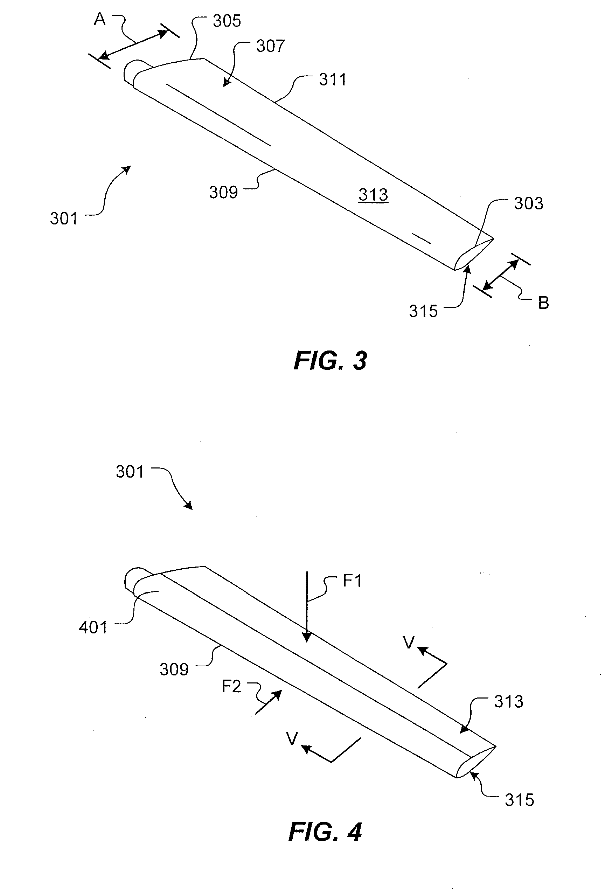

Referring now to Figure 3 in the drawings, an oblique view of a rotor 301 is shown. Rotor 301 has a tip 303, a root 305, and an airfoil surface 307 disposed between tip 303 and root 305. Airfoil surface 307 has a leading edge 309 and a trailing edge 311. A suction surface 313 and a pressure surface 315 extend from leading edge 309 to trailing edge 311.

Rotor 301 has two chord lengths A and B that extend linearly from leading edge 309 to trailing edge 311. Chord A is located at root 305 while chord B is located at tip 303. In the exemplary embodiment, chord A has a greater length than chord B and gradually decreases in length from root 305 to tip 303. Rotors are designed with various shapes, sizes and geometric contouring. For example, in alternative embodiments, the chord length could increase then decrease from root to tip. Considerable time and effort is invested in forming, grinding, polishing, and bonding the surface of the rotor through conventional methods for applying abrasion resistant materials. Additional time and effort is exhausted as the longitudinal length of the rotor increases and when the contouring becomes more complex.

Referring now to Figure 4 in the drawings, an oblique view of rotor 301 is shown with an abrasion resistant material 401 that has been applied according to the preferred process of the present application. Abrasion resistant material 401 is applied to the leading edge 309, a portion of suction surface 313, and a portion of pressure surface 315. Two forces F1 and F2 illustrate forces acting against rotor 301 during flight.

Force F1 depicts a force exerted against the surface of the rotor as the aircraft is propelled during flight. Rotors are composed of sufficiently flexible materials such as composites, metals, plastics, wood, and other suitable materials for counteracting force F1. To retain such flexibility, it is found that the first coat of abrasion resistant material should be composed primarily of an elastomeric or similarly suited material for enabling the rotor to retain flexibility. In the preferred embodiment, the first coat has a composition of approximately 70 percent part per volume of an elastomeric material and approximately 30 percent part per volume of a metallic material. It should be understood that these percentages can vary in alternative embodiments. For example, the first composition could be composed of approximately 90 percent elastomeric material and 10 percent metallic material.

In the preferred embodiment, the abrasion resistant material is composed of an elastomeric material and a metallic material. The elastomeric material includes Teflon, polyimide, epoxy, or other suitable materials. The metallic material could include nickel, cobalt, or other suitable materials. In alternative embodiments, the abrasion resistant material could be composed of one or more materials in addition to the elastomeric and metallic materials discussed. For example, an alternative embodiment could include an abrasion resistant material composed of composite, plastic, and metallic materials. Despite the materials used, the first coat should be composed of a material suited for allowing the rotor to retain flexibility.

Force F2 depicts the force exerted against leading edge 309 due to the bombardment of particulate matter during flight. The particulate matter gradually wears down the contoured shape of the leading edge. As such, abrasion resistant material is applied to overcome the undesired wear. In the preferred embodiment, abrasion resistant material 401 is applied to leading edge 309, a portion of suction surface 313, and a portion of pressure surface 315 to a length up to 30 percent of the chord length, the chord length being measured from leading edge 309 to trailing edge 311. In alternative embodiments, abrasion resistant material 401 could be applied to various portions of the rotor, including the entire surface area or solely to the suction or pressure surfaces.

In the preferred embodiment, the abrasion resistant material is composed of both a metallic material and an elastomeric material. The elastomeric material provides means for allowing the rotor to retain flexibility, while the metallic material withstands wear from particulate matter. Thus, in the preferred embodiment the second coat is composed of an abrasion resistant material having a metallic rich composition. The second coat is composed of approximately 5 percent part per volume of the elastomeric material and approximately 95 percent part per volume of the metallic material. However, it should be understood that these percentages can change in alternative embodiments. For example, the second composition could be composed of an abrasion resistant material having 30 percent part per volume of the elastomeric material and 70 percent part per volume of the metallic material. Despite the elastomeric to metallic ratio used, the second coat should be composed of a material that efficiently withstands wear from particulate matter.

In the preferred embodiment, multiple coats of abrasion resistant material are applied to the rotor. It should be understood that for the purpose of this application, a coat is defined as a layer of abrasion resistant material having a different composition than the other layers of abrasion resistant material applied. For example, a first coat is a layer of abrasion resistant material having a first composition and a second coat is a layer of abrasion resistant material having a second composition, the second coat having a different composition than the first coat. Continuous application of multiple layers of abrasion resistant material that gradually transitions from a first composition to a second composition is considered to be comprised of multiple coats of abrasion resistant material. It should be appreciated that alternative embodiments could include solely a first and a second coat. In the preferred embodiment, a plurality of thin intermediary coats are disposed between the first and second coats. Like the first and second coats, the intermediary coats are composed of both metallic and elastomeric materials. The intermediary coats gradually transition from an elastomeric rich to a metallic rich composition.

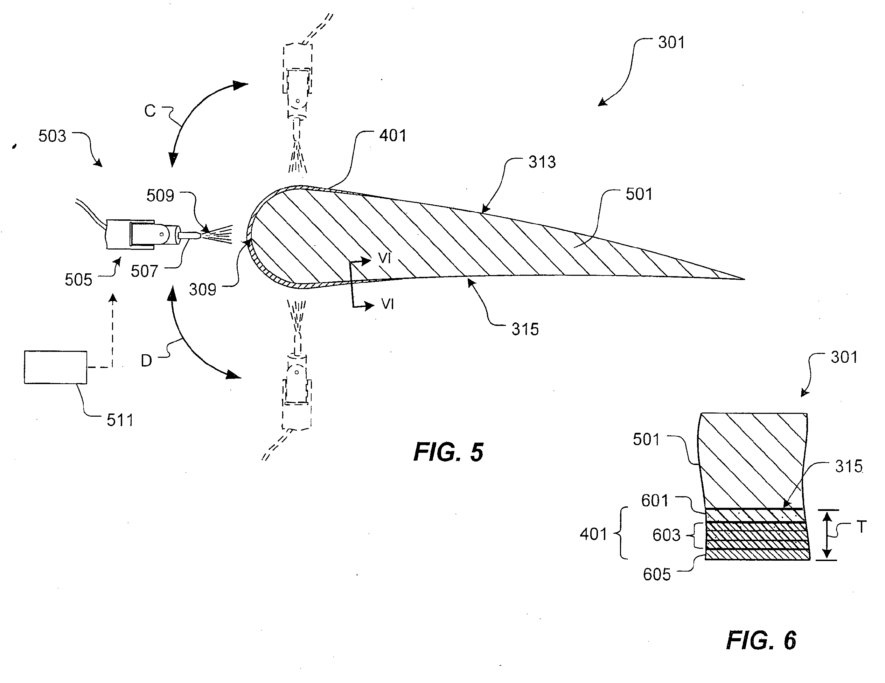

Referring now to Figure 5 in the drawings, an enlarged longitudinal cross-sectional view of a section 501 of rotor 301 is shown taken at V-V of Figure 4. Figure 5 illustrates cross-section 501 with abrasion resistant material 401 applied according to the preferred process of the present application. Abrasion resistant material 401 is applied to leading edge 309, a portion of suction surface 313, and a portion of pressure surface 315 with a spray coating system 503. System 503 includes a spray gun 505 having a nozzle 507 for directing spray 509 onto the surface of the rotor.

Spray gun 505 is translatable in different directions with respect to rotor 301. As is shown, spray gun 505 can pivoted about arches C and D for spraying abrasion resistant materials onto surfaces 313 and 315, respectively. Spray gun 505 can also traverse down the longitudinal axis of rotor 301 for spraying the entire length of leading edge 309. In the preferred process, a larger sized nozzle 507 is used to produce larger diameter particles of spray 509 for creating a rough finish. A smaller sized nozzle 507 is used to produce finer particles of spray 509 for creating a smoother finish. Spray gun 505 can be configured to couple to an automative device 511 such as automative rail system or a robotic arm.

Spray 509 is composed of a carrier gas and abrasion resistant material 401. In the preferred embodiment, the carrier gas includes a primary gas (Argon) and a secondary gas (Helium or Hydrogen). The carrier gas is heated to a temperature that sufficiently melts abrasion resistant material 401, but is not heated to a temperature that changes the microstructure or properties of the rotor during the application process. As discussed, rotor 301 is composed of a material sufficiently flexible to withstand forces F1 and F2. The rotor is susceptible to deformation during the abrasion application process. In the preferred embodiment, the spray is applied at a temperature of less than 250 degrees Fahrenheit and with a Mach velocity ranging between Mach 1 and Mach 3. The splat size and density of the abrasion resistant material varies according to the nozzle size, temperature applied, and velocity propelled. The low temperature and high velocity provides sufficient thermal and kinetic energy for effectively bonding the abrasion resistant material to the surface of the rotor.

Referring now to Figure 6 in the drawings, an enlarged cross-sectional view of a portion of section 501 is shown taken at VI-VI of Figure 5. Figure 6 illustrates abrasion resistant material 401 applied to pressure surface 315 according to the preferred process of the present application. As is shown, abrasion resistant material 401 has a thickness T and includes three coatings 601, 603, and 605.

In the preferred embodiment, abrasion resistant material 401 has a thickness T between .001 to .08 inches. It should be appreciated that spray coating system can be configured to apply coats with various thicknesses, thereby varying the overall thickness T of the abrasion resistant material. For example, in some applications a larger thickness of abrasion resistant material is desired at the tip of the rotor. System 503 can be configured to decrease the longitudinal speed near the tip while retaining the same feed rate of propelling spray 509, thereby increasing the thickness of each coat applied.

As discussed, first coat 603 is composed primary of an elastomeric material, while second coat 605 is composed primary of a metallic material. In the preferred embodiment, intermediary coat 603 includes a plurality of layers disposed between first coat 601 and second coat 605. Each layer within intermediary coat 603 is composed of composition of abrasion resistant material that gradually transitions from an elastomeric rich material to a metallic rich material. In some embodiments, coats 601, 603, and 605, as well as layers from coat 603 or other coats, can be interposed by other layers and coats of other material as desired. Also, in some embodiments, material 401 can gradually transition from one composition to another rather than be composed of discrete coats and layers.

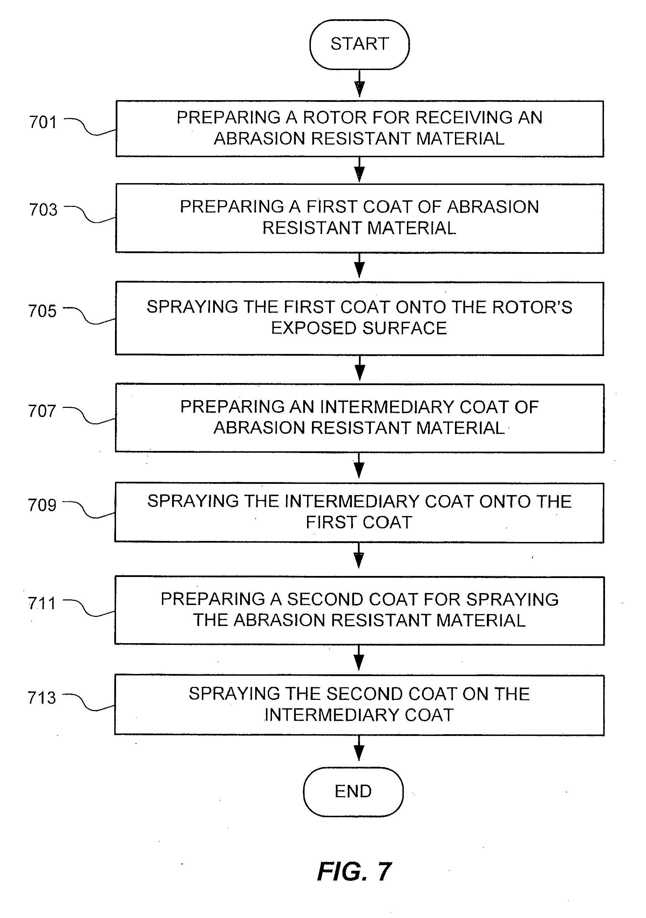

Referring now to Figure 7 in the drawings, a flow chart depicting the preferred process for applying abrasion resistant material according to the present application is illustrated. Figure 7 includes a number of interrelated steps for applying an abrasion resistant material to a rotor.

Box 701 pertains to the process of preparing a rotor for receiving the abrasion resistant material. In this step, the surface of the rotor is cleaned and roughened to enhance adherence of subsequently applied abrasion resistant material. Cleaning techniques include mechanical abrasion such as through a vapor or air blast type process employing dry or liquid abrasion materials that impact the surface of the rotor. This step also includes the process of preparing the rotor for application of the abrasion resistant material either through a manual process or an automative process.

In the preferred embodiment, the abrasion resistant material is applied in the field through a manual or automative process while the rotor remains attached to the aircraft. To perform field operations, equipment used to apply the abrasion resistant materials, i.e., powder feeder, compressor, gas supply, etc., is transported to the aircraft via truck or by other suitable vehicles. The preferred process enables a worker to either manually apply abrasion resistant material to the rotor or to use an automative device to perform such features. In the preferred embodiment, the automative device is preprogrammed with the geometric dimensions of the rotor, feed rates for applying the abrasion resistant material, elastomeric to metallic ratios, and thicknesses for each coat.

It should be appreciated that alternative embodiments of this step could include a process of detaching the rotor from the aircraft and coupling the rotor to a support structure. After the rotor is coupled to the support structure, the abrasion resistant material is applied either manually or through automative means, as described above. In this process, the support structure can be transported to the aircraft for field operations.

Boxes 703 and 705 pertain to the process of preparing a first coat of abrasive material and spraying the first coat onto the surface of the rotor. The step of prepared the first coat is achieved by providing a hopper or similar device for storing and mixing the elastomeric and the metallic materials. The mixing process can be achieved by manually mixing the materials together or by mixing the materials through an automative process. In the preferred embodiment, a powder feeder is operably associated with the hopper for providing the desired elastomeric to metallic material ratios. After the first coat is prepared, the first coat is sprayed directly onto the surface of the rotor via spray system 503.

Boxes 707 and 709 pertain to the process of preparing an intermediary coat of abrasive material and the process of spraying the intermediary coat onto the first coat. As discussed, the intermediary coats are composed of both metallic and elastomeric materials and gradually transition from an elastomeric rich to a metallic rich composition. The elastomeric to metallic ratios are adjusted through an automative or manual process.

Boxes 711 and 713 pertain to the process of preparing a second coat of an abrasion resistant material and spraying the second coat onto the intermediary coat. The second coat is the final coat applied. As discussed, this coat is composed of an abrasion resistant material having a larger percentage part per volume of the metallic material.

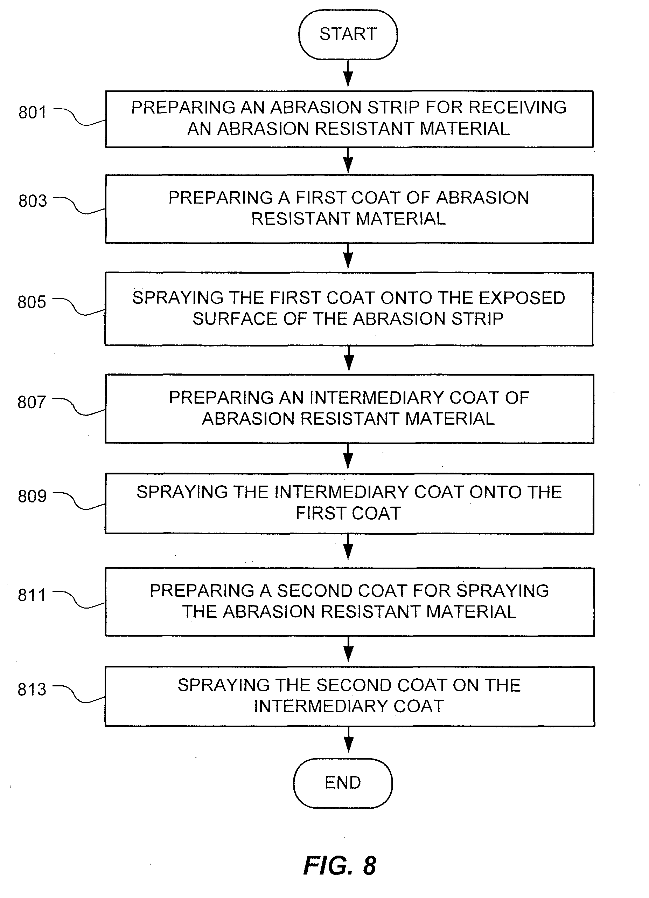

Referring now to Figure 8 in the drawings, a flow chart depicts an alternative process for applying abrasion resistant material to an abrasion strip. Figure 8 includes a number of interrelated steps for applying the abrasion resistant material to the abrasion strip. It should be understood that this process is substantially similar to the preferred process of applying abrasion resistant material to a rotor and that the preferred process can be applied to any suitable substrate. For example, the wing of an aircraft experiences constant bombardment of particulate matter during flight, resulting in substantial wear. To overcome the abrasion wear, abrasion resistant material is applied to the wing according to the preferred process of the present application.

In Figure 8, box 801 pertains to an abrasion strip being prepared for abrasion resistant material. In this step, the surface of the abrasion strip is cleaned and roughened to enhance adherence of subsequently applied abrasion resistant material. Cleaning techniques include mechanical abrasion such as through a vapor or air blast type process employing dry or liquid abrasion materials that impact the surface of the abrasion strip.

Boxes 803 and 805 pertain to the first coat being prepared and sprayed onto the surface of the abrasion strip. The first coat includes a composition composed of at least a first and a second material. The first coat is composed of a higher percentage part per volume of the first material than the percentage part per volume of the second material. In the preferred embodiment, the first material is an elastomeric material and the second material is a metallic material.

In the preferred embodiment, the abrasion resistant material is applied in the field through a manual or automative process while the abrasion strip remains attached to the aircraft. To perform field operations, equipment used to apply the abrasion resistant materials, i.e., powder feeder, compressor, gas supply, etc., is transported to the aircraft via truck or by other suitable vehicles. The preferred process enables a worker to either manually apply abrasion resistant material to the abrasion strip or to use an automative device to perform such features. In the preferred embodiment, the automative device is preprogrammed with the geometric dimensions of the abrasion strip, feed rates for applying the abrasion resistant material, elastomeric to metallic ratios, and thicknesses for each coat.

It should be appreciated that alternative embodiments of this step could include a process of detaching the abrasion strip from the aircraft and coupling the abrasion strip to a support structure. After the abrasion strip is coupled to the support structure, the abrasion resistant material is applied either manually or through automative means, as described above. In this process, the support structure can be transported to the aircraft for field operations.

Boxes 807 and 809 pertain to the process of preparing and spraying an intermediary coat onto the first coat. As discussed, the intermediary coats are composed of both metallic and elastomeric materials and gradually transition from an elastomeric rich to a metallic rich composition. The elastomeric to metallic ratios are adjusted through an automative or manual process.

Boxes 811 and 813 pertain to the second coat being prepared and sprayed onto the surface of the first coat. The second coat is the final coat applied. The second coat is composed of an abrasion resistant material having a larger percentage part per volume of the second material.

The process of the present application provides significant advantages, including: (1) handling and shipping costs are reduced; (2) substantial time and effort is no longer exhausted through the upgrading process; (3) different coatings are applied without having to change any forming or cutting tooling; and (4) the worker can perform the application process in the field.

## Claims

1. A process for applying an abrasion resistant material to a rotor of an aircraft, the rotor having a tip, a root, a leading edge, a trailing edge, a surface disposed between the tip and the root, and a chord length extending linearly from the leading edge to the trailing edge, the process comprising:
preparing the surface of the rotor for receiving the abrasion resistant material;
preparing a first coat of the abrasion resistant material, the first coat being composed of an elastomeric abrasion resistant material;
spraying the first coat onto the surface of the rotor;
preparing an intermediary coat being composed of the elastomeric abrasion resistant material and a metallic abrasion resistant material;
spraying the intermediary coat on the first coat;
preparing a second coat of the abrasion resistant material, the second coat being composed of a metallic abrasion resistant material; and
spraying the second coat onto the intermediary coat; **characterised in that** the intermediary coat includes a plurality of abrasion resistant layers that transition from a smaller percentage part per volume of the elastomeric material to a larger percentage part per volume of the metallic material.

2. The process according to claim 1, wherein the first coat is composed of an abrasion resistant material having a 70 percent part per volume of the elastomeric material and a 30 percent part per volume of the metallic material.

3. The process according to claim 1, wherein the second coat is composed of an abrasion resistant material having a 5 percent part per volume of the elastomeric material and a 95 percent part per volume of the metallic material.

4. The process according to claim 1, further comprising:
applying the abrasion resistant material to the rotor while the rotor remains coupled to the aircraft.

5. The process according to claim 1, further comprising:
removing the rotor from the aircraft; and
coupling the rotor to a support structure.

6. The process according to claim 1, wherein the spraying of the first coat onto the surface of the rotor is achieved by providing a coating system having a plasma spray gun.

7. The process according to claim 6, wherein the coating system is operably associated with an automative device for propelling abrasion resistant material onto the surface of the rotor.

8. The process according to claim 6, wherein the coating system is configured for manually applying abrasion resistant material onto the surface of the rotor.

9. The process according to claim 1, wherein the first coat is sprayed onto the surface area of the rotor to a distance up to about 30 percent of the chord length, the chord length being measured from the leading edge to the trailing edge of the rotor.

## Patentansprüche

1. Ein Verfahren zum Auftragen von abriebfesten Materialien auf den Rotor eines Fluggerätes, wobei der Rotor eine Nase, eine Wurzel, eine Eintrittskante, eine Austrittskante, eine Fläche zwischen der Nase und der Wurzel und eine Sehnenlänge aufweist, die sich linear von der Eintrittskante zur Austrittskante erstreckt, das Verfahren bestehend aus:
der Vorbereitung der Oberfläche des Rotors zur Aufnahme des abriebfesten Materials;
der Vorbereitung einer ersten Schicht des abriebfesten Materials, wobei die erste Schicht aus einem elastomeren abriebfesten Material besteht;
dem Aufsprühen der ersten Schicht auf die Rotoroberfläche;
der Vorbereitung einer Zwischenschicht, die aus elastomerem abriebfestem Material und einem metallischen abriebfesten Material besteht; dem Aufsprühen der Zwischenschicht auf die erste Schicht;
der Vorbereitung einer zweiten Schicht des abriebfesten Materials, wobei die zweite Schicht
aus einem metallischen abriebfesten Material besteht; und
dem Aufsprühen der zweiten Schicht auf die Zwischenschicht; dadurch charakterisiert, dass
die Zwischenschicht eine Vielzahl abriebfester Schichten einschließt, die von einem geringeren Volumen-Prozentanteil des elastomeren Materials zu einem größeren Volumen-Prozentanteil des metallischen Materials übergehen.

2. Das Verfahren gemäß Anspruch 1, wobei die erste Schicht aus einem abriebfesten Material mit 70 Volumen-Prozentanteil des elastomeren Materials und mit 30 Volumen-Prozentanteil des metallischen Materials besteht.

3. Das Verfahren gemäß Anspruch 1, wobei die zweite Schicht aus einem abriebfesten Material mit 5 Volumen-Prozentanteil des elastomeren Materials und mit 95 Volumen-Prozentanteil des metallischen Materials besteht.

4. Das Verfahren gemäß Anspruch 1, darüberhinaus bestehend aus:
Dem Aufbringen des abriebfesten Materials auf den Rotor, während der Rotor mit dem Fluggerät gekoppelt bleibt.

5. Das Verfahren gemäß Anspruch 1, darüberhinaus bestehend aus:
dem Entfernen des Rotors vom Fluggerät; und
Ankoppeln des Rotors an einen Stützkörper.

6. Das Verfahren gemäß Anspruch 1, wobei das Aufsprühen der ersten Schicht auf die Rotoroberfläche erreicht wird, indem ein Beschichtungssystem mit einer Plasmaspritzpistole bereitgestellt wird.

7. Das Verfahren gemäß Anspruch 6, wobei das Beschichtungssystem funktionsfähig mit einer automatischen Vorrichtung zum Auftragen des abriebfesten Materials auf die Rotoroberfläche verbunden ist.

8. Das Verfahren gemäß Anspruch 6, wobei das Beschichtungssystem so gestaltet ist, dass das abriebfeste Material manuell auf die Rotoroberfläche aufgetragen werden kann.

9. Das Verfahren gemäß Anspruch 1, wobei die erste Schicht in einem Abstand von ungefähr 30 Prozent der Sehnenlänge auf den Oberflächenbereich des Rotors aufgesprüht wird, die Sehnenlänge wird dabei von der Eintrittskante zur Austrittskante des Rotors gemessen.

## Revendications

1. Un procédé d'application d'un matériau résistant à l'abrasion à un rotor d'un aéronef, le rotor possédant une pointe, une racine, un bord d'attaque, un bord de fuite, une surface disposée entre la pointe et la racine et une longueur de corde s'étendant de manière linéaire du bord d'attaque au bord de fuite, le procédé comprenant :
la préparation de la surface du rotor de façon à recevoir le matériau résistant à l'abrasion,
la préparation d'une première couche du matériau résistant à l'abrasion, la première couche étant composée d'un matériau élastomère résistant à l'abrasion,
la pulvérisation de la première couche sur la surface du rotor,
la préparation d'une couche intermédiaire qui est composée du matériau élastomère résistant à l'abrasion et d'un matériau métallique résistant à l'abrasion,
la pulvérisation de la couche intermédiaire sur la première couche,
la préparation d'une deuxième couche du matériau résistant à l'abrasion, la deuxième couche étant composée d'un matériau métallique résistant à l'abrasion, et
la pulvérisation de la deuxième couche sur la couche intermédiaire, **caractérisé en ce que**
la couche intermédiaire comprend une pluralité de couches résistantes à l'abrasion qui évoluent d'un plus petit pourcentage en volume du matériau élastomère à un plus grand pourcentage en volume du matériau métallique.

2. Le procédé selon la Revendication 1, où la première couche est composée d'un matériau résistant à l'abrasion possédant un pourcentage en volume de 70% du matériau élastomère et un pourcentage en volume de 30% du matériau métallique.

3. Le procédé selon la Revendication 1, où la deuxième couche est composée de un matériau résistant à l'abrasion possédant un pourcentage en volume de 5% du matériau élastomère et un pourcentage en volume de 95% du matériau métallique.

4. Le procédé selon la Revendication 1, comprenant en outre :
l'application du matériau résistant à l'abrasion au rotor pendant que le rotor demeure couplé à l'aéronef.

5. Le procédé selon la Revendication 1, comprenant en outre :
le retrait du rotor de l'aéronef, et
le couplage du rotor à une structure de support.

6. Le procédé selon la Revendication 1, où la pulvérisation de la première couche sur la surface du rotor est réalisée par la fourniture d'un système d'application de couche possédant un chalumeau à plasma.

7. Le procédé selon la Revendication 6, où le système d'application de couche est associé de manière opérationnelle à un dispositif à moteur destiné à la propulsion d'un matériau résistant à l'abrasion sur la surface du rotor.

8. Le procédé selon la Revendication 6, où le système d'application de couche est configuré pour une application manuelle d'un matériau résistant à l'abrasion sur la surface du rotor.

9. Le procédé selon la Revendication 1, où la première couche est pulvérisée sur la surface du rotor à une distance d'environ 30 % de la longueur de corde, la longueur de corde étant mesurée du bord d'attaque au bord de fuite du rotor.
